# EUROPÄISCHE PATENTANMELDUNG

(11) **EP 2 230 389 A1**
(43) Veröffentlichungstag der Anmeldung: **22.09.2010**
(21) Anmeldenummer: 09151350.7
(22) Anmeldetag: 26.01.2009
(51) Int. Cl.: F01K 23/06, F02C 3/28

(54) **Synthesegasbrennstoffsystem sowie ein Verfahren zum Betrieb eines Synthesegasbrennstoffsystems**

(71) Anmelder: Siemens Aktiengesellschaft, 80333 München (DE)
(72) Erfinder: Keyser, Jens, 90766 Fürth (DE); Brunhuber, Christian, 91275 Auerbach (DE); Reimuth, Oliver, 91058 Erlangen (DE)

(57) **Zusammenfassung**

Die Erfindung betrifft ein Synthesegasbrennstoffsystem (8) mit einer von einer Vergasungseinrichtung (10 abzweigenden Haupt-Synthesegasleitung (9), wobei ein Synthesegasspeicherbehälter (33) über eine erste Nebenleitung (34) an die Haupt-Synthesegasleitung (9) angeschlossen ist. Die Erfindung betrifft ferner ein Verfahren zum Betrieb eines solchen Synthesegasbrennstoffsystems (8).

## Beschreibung

Die Erfindung betrifft ein Synthesegasbrennstoffsystem, insbesondere für eine Gas- und Dampfturbinenanlage, und bezieht sich auf das Problem der schnellen Laständerungen der Gasturbine, wie sie beispielsweise durch die Forderungen des britischen Grid Codes hervorgerufen werden. Die Erfindung betrifft ferner ein Verfahren zum Betrieb eines Synthesegasbrennstoffsystems für schnelle Laständerungen einer Gasturbine im Synthesegasbetrieb.

Als Alternative zu herkömmlichen Dampfkraftwerken (DKW), vor allem in Hinsicht auf die potentiellen Wirkungsgradvorteile der GuD-Anwendung im Vergleich zum DKW, wird der Einsatz von Vergasungskraftwerken (IGCC-Integrated Gasification Combined Cycle) zur Erzeugung von Synthesegasen mit anschließendem Einsatz in einem GUD gesehen. Wesentlich für den Betrieb einer IGCC-Anlage ist das dem GuD vorgeschaltete Synthesegasbrennstoffsystem, bestehend aus den Einzelkomponenten Stickstoffverdünnung, Wasser-/Dampf-Sättigung, Erdgasbeimischung, Luftentnahme und Wärmetauscher.

Das Ziel des Synthesegasbrennstoffsystems ist die Bereitstellung eines konditionierten Synthesegases entsprechend der Temperatur- und Heizwertanforderungen des stromabwärts liegenden Verbrauchers, der Gasturbine sowie im luftseitig integrierten Fall die Bereitstellung von Druckluft für die integrierte Verwendung in der Luftzerlegungsanlage. Die Konditionierung und somit Heizwerteinstellung des am Eintritt in das Synthesegasbrennstoffsystem vorliegenden Roh-Synthesegases erfolgt über die oben genannten Einzelkomponenten/-systeme. Die Temperatur des konditionierten Synthesegases wird vor dem Austritt aus dem Synthesegasbrennstoffsystem mit einem Wärmetauscher eingestellt. Die Druckluft wird bei (teil-) integrierter Luftentnahme dem Gasturbinenverdichter, bei nicht integrierter Luftentnahme einem separaten Verdichter entnommen und mittels integrierten Wärmetauschern auf das von der Luftzerlegungsanlage geforderte Temperaturniveau eingestellt. Die DE 100 02 084 C2 beschreibt eine solche Anlage.

Das Synthesegasbrennstoffsystem ist aufgrund der Interaktion mit den beteiligten Hauptsystemen des IGCC (Luftzerlegungsanlage, Vergasung, Gaswäsche, GUD) derzeitig als grundlastfähiges Teilsystem der Komplettanlage ausgeführt, wobei steile Lastgradienten der Gasturbine mittels reiner Synthesegasmassenstromsteigerung nicht realisiert werden können.

Da zunehmend die Verfügbarkeit einer Fahrweise mit steilen Lastgradienten der Gasturbine in der IGCC-Konfiguration unter Nutzung des Synthesegasbetriebes gefordert wird, muss das Synthesegasbrennstoffsystem möglichst unabhängig und mit nur geringen Auswirkung auf die benachbarten Hauptsysteme an diese geänderten Randbedingungen angepasst werden.

Aufgabe der Erfindung ist daher die Angabe eines Synthesegasbrennstoffsystems für schnelle Laständerungen der Gasturbine, sowie die Angabe eines Verfahrens zum Betrieb eines solchen Systems.

Erfindungsgemäß wird die auf ein Synthesegasbrennstoffsystem gerichtete Aufgabe gelöst durch ein Synthesegasbrennstoffsystem mit einer von einer Vergasungseinrichtung abzweigenden Haupt-Synthesegasleitung, wobei ein Synthesegasspeicherbehälter über eine erste Nebenleitung an die Haupt-Synthesegasleitung angeschlossen ist.

Die Erfindung beruht demnach auf dem Gedanken, einen zusätzlichen Brennstoffmassenstrom durch einen Synthesegasspeicher bereitzustellen. Es handelt sich bei dieser Erfindung um eine Pufferung des konditionierten Synthesegases in einem dafür vorgesehen Speichertank. Die Funktion des Synthesegasspeicherbehälters besteht darin, den für eine schnelle Laststeigerung notwendigen konditionierten Synthesegasmassenstrom bei vorübergehendem Synthesegasmangel aufgrund eines begrenzten Lastgradienten des Vergasers bereitzustellen.

Vorteilhafterweise ist der Synthesegasspeicherbehälter in Strömungsrichtung eines Synthesegases in einem stromabwärts gelegenen Teil des Synthesegasbrennstoffsystems angeordnet. Eine schnelle Laststeigerung der kompletten IGCC-Anlage ist an die schnelle Verfügbarkeit des zusätzlich nutzbaren Brennstoffmassenstromes (Synthesegas) in Verbindung mit einem ausreichenden Heizwert gekoppelt. Bei der Nutzung eines zusätzlichen Brennstoffmassenstromes durch einen Synthesegasspeicher muss im Falle einer schnellen Laststeigerung, aufgrund der Strömungsverzögerung des Brennstoffmassenstromes bis zum Erreichen der Gasturbine, resultierend aus der Größe und Länge der verbauten Apparate, bei der Ausführung der Einspeisung des zusätzlichen Brennstoffmassenstromes (Synthesegas) im Synthesegasbrennstoff-System darauf geachtet werden, dass die Einspeisung so nah wie möglich an der Gasturbine liegt.

Weiterhin vorteilhaft ist es, wenn ein Kompressor zum Aufbau des benötigten Drucks und eine erste Regelarmatur zur Mengenregelung des Synthesegases bzw. zur Druckregelung des Synthesegasspeicherbehälters in die erste Nebenleitung geschaltet sind.

Dabei ist es vorteilhaft, wenn der Synthesegasspeicherbehälter über eine zweite Nebenleitung an die Haupt-Synthesegasleitung angeschlossen ist und eine zweite Regelarmatur, zur definierten und schnellen Mengen- und Druckregelung des aus dem Synthesegasspeicherbehälter über die zweite Nebenleitung in die Synthesegas-Hauptleitung ausströmenden Synthesegases, in die zweite Nebenleitung geschaltet ist.

Es ist zweckmäßig, wenn zur Vermeidung von Kondensation des konditionierten Synthesegases im Synthesegasspeicherbehälter dieser eine Heizung aufweist. Aus demselben Grund ist es weiterhin zweckmäßig, wenn der Synthesegasspeicherbehälter eine Isolierung aufweist.

In einer vorteilhaften Ausführung der Erfindung zweigt eine absperrbare Drainageleitung vom Synthesegasspeicherbehälter ab, so dass im Falle eines Abfahrens des Synthesegasspeicherbehälters dieser von flüssigen Kondensaten entleert werden kann.

Vorteilhafter Weise ist der Synthesegasspeicherbehälter über eine Druckwächtervorrichtung mit einer Fackel verbunden. Die Druckwächtervorrichtung mit Sicherheitsarmatur sichert den maximal zulässigen Druck des Synthesegases im Synthesegasspeicherbehälter gegen Überschreitung ab. Steigt der Druck im Synthesegasspeicherbehälter, ermöglicht die Sicherheitsarmatur den Abgang des Synthesegases zur Fackel, mit der die überschüssigen Gase verbrannt werden.

Vorteilhafter Weise ist das erfinderische Synthesegasbrennstoffsystem in einer Gas- und Dampfturbinenanlage mit einer Gasturbine einer Brennkammer der Gasturbine vorgeschaltet, wobei die Haupt-Synthesegasleitung in die Brennkammer mündet und wobei ein Sättiger in die Haupt-Synthesegasleitung geschaltet ist und der Synthesegasspeicherbehälter zwischen den Sättiger und die Brennkammer geschaltet ist.

Im erfinderischen Verfahren zum Betrieb eines Synthesegasbrennstoffsystems für schnelle Laständerungen einer Gasturbine im Synthesegasbetrieb wird ein im Überschuss bereitgestelltes Synthesegas in einen Synthesegasspeicherbehälter eingeleitet und bei Bedarf aus dem Synthesegasspeicherbehälter wieder entnommen, bis eine Vergasungseinrichtung vollständig einen benötigten Synthesegasmassenstrom zur Verfügung stellen kann. Gemäß der Erfindung wird das konditionierte Synthesegas in einem dafür vorgesehenen Speichertank gepuffert.

Vorteilhafter Weise wird das Synthesegas vor dem Einleiten in den Synthesegasspeicherbehälter konditioniert, so dass es bei Bedarf sofort in der richtigen Konditionierung zur Verfügung gestellt werden kann.

Weiterhin vorteilhaft ist es, wenn das Synthesegas vor dem Einleiten in den Synthesegasspeicherbehälter komprimiert wird.

Die Erfindung wird beispielhaft anhand der Zeichnungen näher erläutert. Es zeigen schematisch und nicht maßstäblich:
- FIG 1: ein bekanntes Synthesegasbrennstoffsystem und
- FIG 2: ein Synthesegasbrennstoffsystem gemäß der Erfindung mit einem Synthesegasspeicherbehälter.

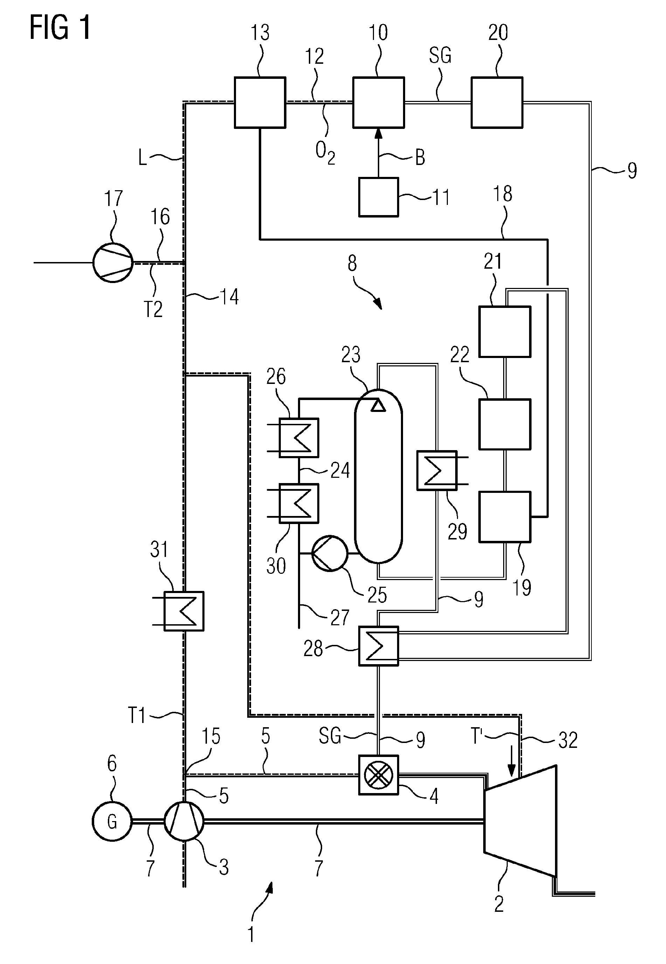

Eine bekannte Gas- und Dampfturbinenanlage umfasst eine Gasturbinenanlage 1 gemäß der Figur 1 und eine nicht näher dargestellte Dampfturbinenanlage. Die Gasturbinenanlage 1 umfasst eine Gasturbine 2 mit angekoppeltem Luftverdichter 3 und eine der Gasturbine 2 vorgeschaltete Brennkammer 4, die an eine Druckluftleitung 5 des Verdichters 3 angeschlossen ist. Die Gasturbine 2 und der Luftverdichter 3 sowie ein Generator 6 sitzen auf einer gemeinsamen Welle 7.

Die Gasturbinenanlage 1 ist für den Betrieb mit einem vergasten Rohgas oder Synthesegas SG, das durch die Vergasung eines fossilen Brennstoffs B erzeugt wird, ausgelegt. Als Synthesegas kann beispielsweise vergaste Kohle oder vergastes Öl vorgesehen sein. Hierzu umfasst die Gasturbinenanlage 1 ein Synthesegasbrennstoffsystem 8, über das der Brennkammer 4 der Gasturbine 2 Synthesegas zuführbar ist. Das Synthesegasbrennstoffsystem 8 umfasst eine Haupt-Synthesegasleitung 9, die eine Vergasungseinrichtung 10 mit der Brennkammer 4 der Gasturbine 2 verbindet. Der Vergasungseinrichtung 10 ist über ein Eintragssystem 11 beispielsweise Kohle, Erdgas, Öl oder Biomasse als fossiler Brennstoff B zuführbar. Weiterhin umfasst das Synthesegasbrennstoffsystem 8 Komponenten, die zwischen der Vergasungseinrichtung 10 und der Brennkammer 4 der Gasturbine 2 in die Haupt-Synthesegasleitung 9 geschaltet sind.

Zur Bereitstellung des für die Vergasung des fossilen Brennstoffs B benötigten Sauerstoffs O₂ ist der Vergasungseinrichtung 10 über eine Sauerstoffleitung 12 eine Luftzerlegungsanlage 13 vorgeschaltet. Die Luftzerlegungsanlage 13 ist eingangsseitig mit einem Luftstrom L beaufschlagbar, der sich aus einem ersten Teilstrom T1 und einem zweiten Teilstrom T2 zusammensetzt. Der erste Teilstrom T1 ist der im Luftverdichter 3 verdichteten Luft entnehmbar. Dazu ist die Luftzerlegungsanlage 13 eingangsseitig an eine Entnahmeluftleitung 14 angeschlossen, die an einer Zweigstelle 15 von der Druckluftleitung 5 abzweigt. In die Entnahmeluftleitung 14 mündet zudem eine weitere Luftleitung 16, in die ein zusätzlicher Luftverdichter 17 geschaltet ist und über die der zweite Teilstrom T2 der Luftzerlegungsanlage 13 zuführbar ist. Im Ausführungsbeispiel setzt sich somit der der Luftzerlegungsanlage 13 zuströmende gesamte Luftstrom L zusammen aus dem von der Druckluftleitung 5 abgezweigten Teilstrom T1 (abzüglich einer nachfolgend erläuterten Teilmenge T') und aus dem vom zusätzlichen Luftverdichter 17 geförderten Luftstrom T2. Ein derartiges Schaltungskonzept wird auch als teilintegriertes Anlagenkonzept bezeichnet. In einer alternativen Ausgestaltung, dem sogenannten vollintegrierten Anlagenkonzept, kann die weitere Luftleitung 16 mitsamt dem zusätzlichen Luftverdichter 17 entfallen, so dass die Bespeisung der Luftzerlegungsanlage 13 mit Luft vollständig über den der Druckluftleitung 5 entnommenen Teilstrom T1 erfolgt.

In die Entnahmeluftleitung 14 ist ein Wärmetauscher 31 geschaltet, um Wärme aus der Entnahmeluft wieder zurückzugewinnen, wodurch ein besonders hoher Wirkungsgrad der Gas- und Dampfturbinenanlage erreichbar ist.

In Strömungsrichtung des Teilstroms T1 gesehen hinter dem Wärmetauscher 31 zweigt von der Entnahmeluftleitung 14 eine Kühlluftleitung 32 ab, über die der Gasturbine 2 eine Teilmenge T' des gekühlten Teilstroms T1 als Kühlluft zur Schaufelkühlung zuführbar ist.

Der in der Luftzerlegungsanlage 13 bei der Zerlegung des Luftstroms L zusätzlich zum Sauerstoff O₂ gewonnene Stickstoff N₂ wird über eine an die Luftzerlegungsanlage 13 angeschlossene Stickstoffleitung 18 einer Mischvorrichtung 19 zugeführt und dort dem Synthesegas SG zugemischt. Die Mischvorrichtung 19 ist dabei für eine besonders gleichförmige und strähnenfreie Vermischung des Stickstoffs N₂ mit dem Synthesegas SG ausgebildet.

Das von der Vergasungseinrichtung 10 abströmende Synthesegas SG gelangt über die Haupt-Synthesegasleitung 9 zunächst in einen Synthesegas-Abhitzedampferzeuger 20, in dem durch Wärmetausch mit einem Strömungsmedium eine Abkühlung des Synthesegases SG erfolgt. Bei diesem Wärmetausch erzeugter Hochdruckdampf kann in nicht näher dargestellter Weise einer Hochdruckstufe eines Wasser-Dampf-Kreislaufs einer Dampfturbinenanlage zugeführt werden.

In Strömungsrichtung des Synthesegases SG gesehen hinter dem Synthesegas-Abhitzedampferzeuger 20 und vor einer Mischvorrichtung 19 sind in die Haupt-Synthesegasleitung 9 eine Entstaubungseinrichtung 21 für das Synthesegas SG sowie eine Entschwefelungsanlage 22 geschaltet. In alternativer Ausgestaltung kann anstelle der Entstaubungseinrichtung 21, insbesondere bei Vergasung von Öl als Brennstoff, auch eine Rußwäschevorrichtung vorgesehen sein.

Für einen besonders geringen Schadstoffausstoß bei der Verbrennung des vergasten Brennstoffs in der Brennkammer 4 ist eine Beladung des vergasten Brennstoffs mit Wasserdampf vor Eintritt in die Brennkammer 4 vorgesehen. Diese kann in wärmetechnisch besonders vorteilhafter Weise in einem Sättigersystem erfolgen. Dazu ist in die Haupt-Synthesegasleitung 9 ein Sättiger 23 geschaltet, in dem der vergaste Brennstoff im Gegenstrom zu aufgeheiztem Sättigerwasser geführt ist. Das Sättigerwasser zirkuliert dabei in einem an den Sättiger 23 angeschlossenen Sättigerkreislauf 24, in den eine Umwälzpumpe 25 sowie zur Vorheizung des Sättigerwassers ein Wärmetauscher 26 geschaltet sind. Zum Ausgleich der bei der Sättigung des vergasten Brennstoffs auftretenden Verluste an Sättigerwasser ist an den Sättigerkreislauf 24 eine Einspeiseleitung 27 angeschlossen.

In Strömungsrichtung des Synthesegases SG gesehen hinter dem Sättiger 23 ist in die Haupt-Synthesegasleitung 9 sekundärseitig ein als Synthesegas-Mischgas-Wärmetauscher wirkender Wärmetauscher 28 geschaltet. Der Wärmetauscher 28 ist dabei primärseitig an einer Stelle vor der Entstaubungseinrichtung 21 ebenfalls in die Haupt-Synthesegasleitung 9 geschaltet, so dass das der Entstaubungseinrichtung 21 zuströmende Synthesegas SG einen Teil seiner Wärme auf das aus dem Sättiger 23 abströmende Synthesegas SG überträgt. Die Führung des Synthesegases SG über den Wärmetauscher 28 vor Eintritt in die Entschwefelungsanlage 22 kann dabei auch bei einem hinsichtlich der anderen Komponenten abgeänderten Schaltungskonzept vorgesehen sein. Insbesondere bei Einschaltung einer Rußwäscheeinrichtung kann der Wärmetauscher bevorzugt synthesegasseitig stromab der Rußwäscheeinrichtung angeordnet sein.

Zwischen den Sättiger 23 und den Wärmetauscher 28 ist in die Haupt-Synthesegasleitung 9 sekundärseitig ein weiterer Wärmetauscher 29 geschaltet, der primärseitig speisewasserbeheizt oder auch dampfbeheizt sein kann. Durch den als Synthesegas-Reingas-Wärmetauscher ausgebildeten Wärmetauscher 28 und den Wärmetauscher 29 ist dabei eine besonders zuverlässige Vorwärmung des der Brennkammer 4 der Gasturbine 2 zuströmenden Synthesegases SG auch bei verschiedenen Betriebszuständen der Gas- und Dampfturbinenanlage gewährleistet.

Zur Wärmeeinkopplung in den Sättigerkreislauf 24 ist zusätzlich zum Wärmetauscher 26, der beispielsweise mit aufgeheiztem, nach einem Speisewasservorwärmer abgezweigtem Speisewasser beaufschlagbar ist, ein Sättigerwasser-Wärmetauscher 30 vorgesehen, der primärseitig mit Speisewasser aus einem nicht dargestellten Speisewasserbehälter beaufschlagbar ist.

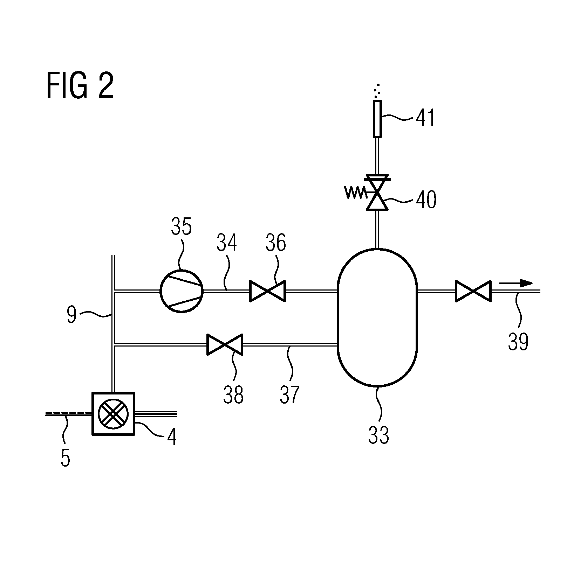

Figur 2 beschreibt das erfinderische Synthesegasbrennstoffsystem 8, bei dem konditioniertes Synthesegas während des Synthesegasbetriebes der IGCC-Anlage vor der Brennkammer 4 über eine erste Nebenleitung 34 der Haupt-Synthesegasleitung 9 entnommen, auf den Speicherdruck mittels eines Kompressors 35 komprimiert und in den Synthesegasspeicherbehälter 33 eingeleitet wird. Die Zuschaltung des Synthesegasspeicherbehälters 33 erfolgt mittels einer ersten Regelarmatur 36, die in die erste Nebenleitung 34 geschaltet ist, zur gezielten Mengen- und Druckregelung des Synthesegasspeicherbehälters 33.

Die Entnahme von Synthesegas aus dem Synthesegasspeicherbehälter 33 erfolgt über eine zweite Nebenleitung 37, über die der Synthesegasspeicherbehälter 33 an die Haupt-Synthesegasleitung 9 angeschlossen ist und mittels einer zweiten Regelarmatur 38, die in die zweite Nebenleitung 37 geschaltet ist, zur definierten und schnellen Mengen- und Druckregelung des aus dem Synthesegasspeicherbehälter 33 in die Haupt-Synthesegasleitung 9 strömenden Synthesegases auf den vorgegebenen Gasturbineneintrittsdruck. Zur Vermeidung von Kondensation des konditionierten Synthesegases im Synthesegasspeicherbehälter 33 wird dieser im Betrieb mittels Heizung und Isolation auf einer Temperatur mit ausreichendem Abstand zur Sättigungslinie des Wassers im Synthesegas gehalten. Im Falle eines Abfahrens des Synthesegasspeicherbehälters 33 wird dieser über absperrbare Drainageleitungen 39 von flüssigen Kondensaten entleert. Die Drucküberwachung des Synthesegasspeicherbehälters 33 zur Befüllung, Speicherung und Entleerung mit Synthesegas erfolgt über eine Druckwächtervorrichtung 40 mit Sicherheitsarmatur zur Abblasung auf die Fackel 41 bei Überschreitung des zulässigen Überdruckes. Der Druck im und das Speichervolumen des Synthesegasspeicherbehälters 33 wird durch den benötigten Synthesegasmassenstrom für schnelle Laständerungen der Gasturbine 2 definiert, bis die Vergasungseinrichtung 10 aufgrund ihrer begrenzten Lastgradienten vollständig den Synthesegasmassenstrom zur Verfügung stellen kann.

## Patentansprüche

1. Synthesegasbrennstoffsystem (8) mit einer von einer Vergasungseinrichtung (10) abzweigenden Haupt-Synthesegasleitung (9), **dadurch gekennzeichnet, dass** ein Synthesegasspeicherbehälter (33) über eine erste Nebenleitung (34) an die Haupt-Synthesegasleitung (9) angeschlossen ist.

2. Das Synthesegasbrennstoffsystem (8) nach Anspruch 1, wobei der Synthesegasspeicherbehälter (33) in Strömungsrichtung eines Synthesegases in einem stromabwärts gelegenen Teil des Synthesegasbrennstoffsystems (8) angeordnet ist.

3. Das Synthesegasbrennstoffsystem (8) nach Anspruch 1 oder 2, wobei ein Kompressor (35) in die erste Nebenleitung (34) geschaltet ist.

4. Das Synthesegasbrennstoffsystem (8) nach einem der Ansprüche 1 bis 3, wobei eine erste Regelarmatur (36) zur Mengenregelung des Synthesegases bzw. zur Druckregelung des Synthesegasspeicherbehälters (33) in die erste Nebenleitung (34) geschaltet ist.

5. Das Synthesegasbrennstoffsystem (8) nach einem der vorhergehenden Ansprüche, wobei der Synthesegasspeicherbehälter (33) über eine zweite Nebenleitung (37) an die Haupt-Synthesegasleitung (9) angeschlossen ist und eine zweite Regelarmatur (38) in die zweite Nebenleitung (37) geschaltet ist.

6. Das Synthesegasbrennstoffsystem (8) nach einem der vorhergehenden Ansprüche, wobei der Synthesegasspeicherbehälter (33) eine Heizung aufweist.

7. Das Synthesegasbrennstoffsystem (8) nach einem der vorhergehenden Ansprüche, wobei der Synthesegasspeicherbehälter (33) eine Isolierung aufweist.

8. Das Synthesegasbrennstoffsystem (8) nach einem der vorhergehenden Ansprüche, wobei eine absperrbare Drainageleitung (39) vom Synthesegasspeicherbehälter (33) abzweigt.

9. Das Synthesegasbrennstoffsystem (8) nach einem der vorhergehenden Ansprüche, wobei der Synthesegasspeicherbehälter (33) über eine Druckwächtervorrichtung (40) mit einer Fackel (41) verbunden ist.

10. Gas- und Dampfturbinenanlage mit einer Gasturbine (2) und einem einer Brennkammer (4) der Gasturbine (2) vorgeschalteten Synthesegasbrennstoffsystem (8) nach einem der vorhergehenden Ansprüche, wobei die Haupt-Synthesegasleitung (9) in die Brennkammer (4) mündet und wobei ein Sättiger (23) in die Haupt-Synthesegasleitung (9) geschaltet ist und der Synthesegasspeicherbehälter (33) zwischen den Sättiger (23) und die Brennkammer (4) geschaltet ist.

11. Verfahren zum Betrieb eines Synthesegasbrennstoffsystems (8) für schnelle Laständerungen einer Gasturbine (2) im Synthesegasbetrieb, **dadurch gekennzeichnet, dass** ein im Überschuss bereitgestelltes Synthesegas in einen Synthesegasspeicherbehälter (33) eingeleitet wird und bei Bedarf aus dem Synthesegasspeicherbehälter (33) wieder entnommen wird, bis eine Vergasungseinrichtung (10) vollständig einen benötigten Synthesegasmassenstrom zur Verfügung stellen kann.

12. Das Verfahren nach Anspruch 11, wobei das Synthesegas vor dem Einleiten in den Synthesegasspeicherbehälter (33) konditioniert wird.

13. Das Verfahren nach einem der Ansprüche 11 oder 12, wobei das Synthesegas vor dem Einleiten in den Synthesegasspeicherbehälter (33) komprimiert wird.
